# EUROPEAN PATENT SPECIFICATION

(11) **EP 1 558 488 B1**
(45) Date of publication and mention of the grant of the patent: **15.09.2010**
(21) Application number: 03772951.4
(22) Date of filing: 04.11.2003
(51) Int. Cl.: B62K 21/16

(54) **COUPLING MEMBER FOR INTERCONNECTING A BICYCLE STEERING ROD AND A BICYCLE FORK ROD**
KUPPLUNGSELEMENT ZUM VERBINDEN VON FAHRRADLENKSTANGE UND FAHRRADGABEL
ELEMENT D'ACCOUPLEMENT DESTINE AU RACCORDEMENT D'UNE TIGE DE DIRECTION ET D'UNE TIGE DE FOURCHE DE BICYCLETTE

(30) Priority: 06.11.2002 NL 1021852
(43) Date of publication of application: 03.08.2005
(73) Proprietor: IDBIKE B.V., 5133 NE Riel (NL)
(72) Inventor: ROOVERS, Gijsbertus, Cornelis, Franciscus, NL-5052 BA Goirle (NL); D'HERRIPON, Bastiaan, Andreas, NL-5051 NN Goirle (NL)
(74) Representative: Dekker-Garms, Alwine Emilie
(86) International application number: PCT/NL2003/000769
(87) International publication number: WO 2004/041632

(56) References cited:
- BE-A- 461 351
- DE-U- 20 205 492
- NL-C- 1 000 014
- NL-C- 1 001 155

## Description

The present invention relates to a coupling member for interconnecting a bicycle steering rod and a bicycle fork rod, which coupling member is provided with a first strap for receiving the bicycle steering rod on the one hand, and is provided with a second strap for receiving an end of the bicycle fork rod on the other hand, wherein inner diameters of the straps are adjustable by means of an adjusting device.

Both in the foregoing and the following, the term "strap" is used to indicate a bore hole of which the circumference is interrupted by a saw cut. Due to this, the inner diameter of the strap can be varied, and the strap is suitable for receiving and clamping an object.

In NL-1000014, a coupling piece is described, which comprises an elongated body which, at one end, is provided with a first strap which is connectable to a bicycle steering rod, and which, at another end, is provided with a second strap which is connectable to a bush transversely attached to the bicycle fork rod. Furthermore, the coupling piece comprises a tightening element extending along the body, which element is connected to both straps. The tightening element serves to simultaneously load the straps, and is operated by means of an eccentric member, which can be rotated by means of a handle. Through a rotation of the eccentric member, the tightening element can be put from a coupling condition to a decoupling condition, and vice versa.

When the tightening element is put from the decoupling condition in the coupling condition, the tightening element is tightened as a result of the rotation of the eccentric member. In this condition, the tightening element pulls both straps to, around the bicycle fork rod and around the bush transversely attached to the bicycle fork rod, wherein the straps tighten around the bicycle steering rod and the bush. Subsequently, the position of the bicycle steering rod relative to the bicycle fork rod is fixed.

When the tightening element is put from the coupling condition in the decoupling condition, the distance which is to be embraced by the tightening element gets shorter as a result of the rotation of the eccentric member, whereby the tightening element is relieved. In this condition, an elastic outward spring of the straps occurs, wherein the inner diameters of the straps increase until the straps are in a relieved condition. At that moment, the inner diameter of the first strap is larger than an outer diameter of the bicycle steering rod, whereas an inner diameter of the second strap is larger than an outer diameter of a bush transversely attached to the bicycle fork rod, whereby the position of the bicycle steering rod relative to the bicycle fork rod can be adjusted.

The known coupling piece has a number of disadvantages.

A first disadvantage relates to the operating force which needs to be exerted to the handle. As a result of the play which in a decoupling condition of the tightening element is present between the first strap and the bicycle steering rod on the one hand, and the second strap and the bush transversely attached to the bicycle fork rod on the other hand, an adjusting distance of the straps is relatively large, and a transmission ratio of the entirety of tightening element, eccentric member and handle needs to be relatively small. Due to this, a relatively large operating force is required at the moment the tightening element needs to be tightened, which is the moment at which the first strap and the bicycle steering rod, and the second strap and the bush transversely attached to the bicycle fork rod, respectively, touch each other. This is a disadvantage for the users of a bicycle which is provided with the coupling piece, especially for users having relatively little hand power, like children. Another disadvantage of the relatively large operating force is that it is not possible to realise operation from a handgrip.

A second disadvantage of the known coupling piece relates to the situation in which, for example, the outer diameter of the bicycle steering rod and the inner diameter of the first strap do not differ much in a relieved condition. In such a situation, it is bothersome to adjust and mount the bicycle steering rod relative to the first strap.

A third disadvantage of the known coupling piece is that additional adjusting means need to be applied to keep the bicycle steering rod and the bush transversely attached to the bicycle fork rod in a fixed mutual position, in a relieved condition of the tightening element. Under the application of the adjusting means, convenience during adjusting the bicycle steering rod relative to the bicycle fork rod is enhanced, because the fixed mutual position can be taken as a starting point. An effect of the application of the adjusting means which is even more important is that the safety is enlarged. During the adjusting process, the bicycle steering rod will be put back to the fixed position relative to the bicycle fork rod by the adjusting means, when the bicycle steering rod is unexpectedly released while the tightening element has not yet been tightened. This also happens when the tension in the tightening element unexpectedly drops, for example as a result of a material defect. Because the bicycle steering rod is put to the fixed position, it is prevented that a cyclist looses control of the bicycle. The application of adjusting means is not required in case of the known coupling piece, but it is desired in view of the above-mentioned (safety) reasons.

It is an objective of the present invention to at least partially eliminate at least one of the above-mentioned disadvantages. This objective is achieved by means of a coupling member of which the adjusting device is adapted to bring about an increase of the inner diameters of the straps when activated from a position which corresponds to a relieved condition of the straps.

An essential difference between the coupling member according to the present invention and the coupling piece according to the state of the art is related to the adjusting device for adjusting the inner diameters of the straps. In the case of the coupling member according to the present invention, the adjusting device is adapted to increase the inner diameters of the straps relative to the inner diameters of the straps in a relieved condition, whereas, in the case of the known coupling piece, it is not possible to open the straps any further when starting from a relieved condition. In the situation in which, for example, the outer diameter of the bicycle steering rod and the inner diameter of the first strap in a relieved condition do not differ much, it is possible, in the case of the coupling member according to the present invention, to further open the first strap when starting from the relieved condition, whereby sufficient play can be created between the bicycle steering rod and the first strap, so that the bicycle steering rod can be easily adjusted relative to the first strap and can be easily mounted. Therefore, the coupling member according to the present invention is not only suitable for receiving bicycle steering rods of which the outer diameter is at the most equal to the inner diameter of the first strap in the relieved condition, but also for receiving bicycle steering rods of which the outer diameter is larger than the inner diameter of the first strap in the relieved condition.

A very important advantage of the coupling member according to the present invention is that it is possible to choose the inner diameters of the straps in the relieved condition in such a way that these inner diameter are smaller than the outer diameters of the bicycle steering rod which needs to be clamped, and the end of the bicycle fork rod which needs to be clamped, respectively. This is a consequence of the fact that the straps can be opened further when starting from the relieved condition. In such a case, the straps are capable of clamping the bicycle steering rod and the end of the bicycle fork rod, without being pulled to by means of the adjusting device. A clamping force or retaining force exerted by the straps is determined by the choice of the bending stiffness of the straps, which for its part is determined by a wall thickness of the straps, and by the difference between the inner diameters of the straps in the relieved condition and the outer diameters of the bicycle steering rod and the end of the bicycle fork rod, respectively.

When the inner diameters of the straps in the relieved condition are smaller than the outer diameters of the bicycle steering rod which needs to be clamped and the end of the bicycle fork rod which needs to be clamped, respectively, there is no danger of freely moving the bicycle steering rod relative to the bicycle fork rod in the relieved condition of the adjusting device. This is only possible in a situation in which the straps deliberately have been opened further by means of the adjusting device. Moreover, the process of tightening the straps requires relatively little operating force, because the straps are inclined to spring inwards to the relieved condition when starting from an opened condition. Due to the relatively low operating force, it is possible to execute the operation of the adjusting device from a distance, at the position of the handgrip, for example by means of a Bowden cable, pull-push rod or the like. Due to this, the safety is further enhanced.

The invention will be explained in more detail on the basis of the following description of a coupling member with reference to the drawing, in which equal reference signs indicate equal or similar parts, and in which:
figure 1 is a side view of a coupling member according to a first preferred embodiment of the present invention, as well as of a portion of a bicycle fork rod;
figure 2 shows a section of the coupling member and portion of the bicycle fork rod, which are shown in figure 1;
figure 3 is a perspective view of a section of the coupling member which is shown in figure 1, wherein straps of the coupling member are opened;
figure 4 is a perspective view of a section of the coupling member which is shown in figure 1, wherein straps of the coupling member are pulled to;
figure 5 is a side view of a coupling member according to a second preferred embodiment of the present invention, as well as of a portion of a bicycle fork rod and a section of a bicycle steering rod;
figure 6 is an exploded view of the coupling member which is shown in figure 5;
figure 7 is a perspective view of a portion of the coupling member which is shown in figure 5, as well as of an end of the bicycle fork rod and a portion of the bicycle steering rod;
figure 8 is a perspective view of a portion of an adjustable eccentric device which is part of the coupling member which is shown in figures 5-7, as well as of an operating handle which is connected to the device;
figure 9 is a perspective view of a section of a coupling member according to a third preferred embodiment of the present invention; and
figure 10 is a perspective view of a section of a coupling member according to a fourth preferred embodiment of the present invention as well as of a portion of a bicycle steering rod and a section of a portion of a bicycle fork rod.

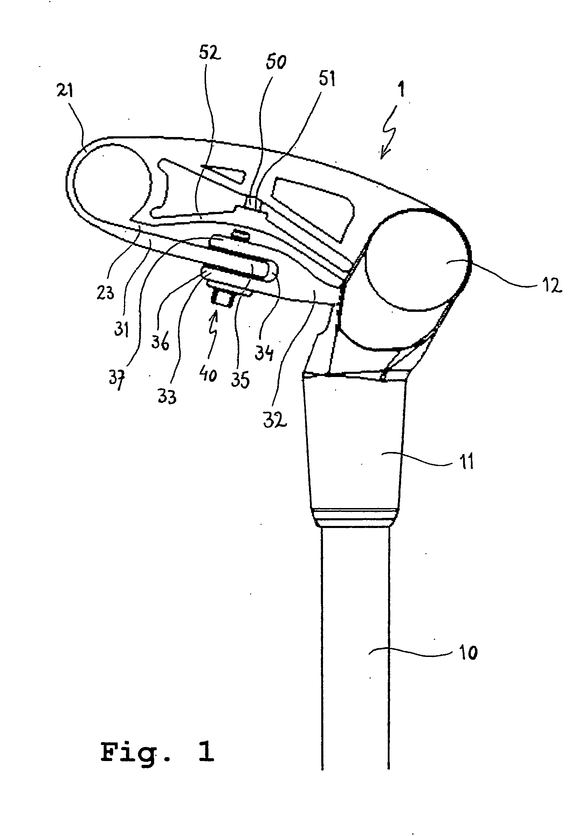

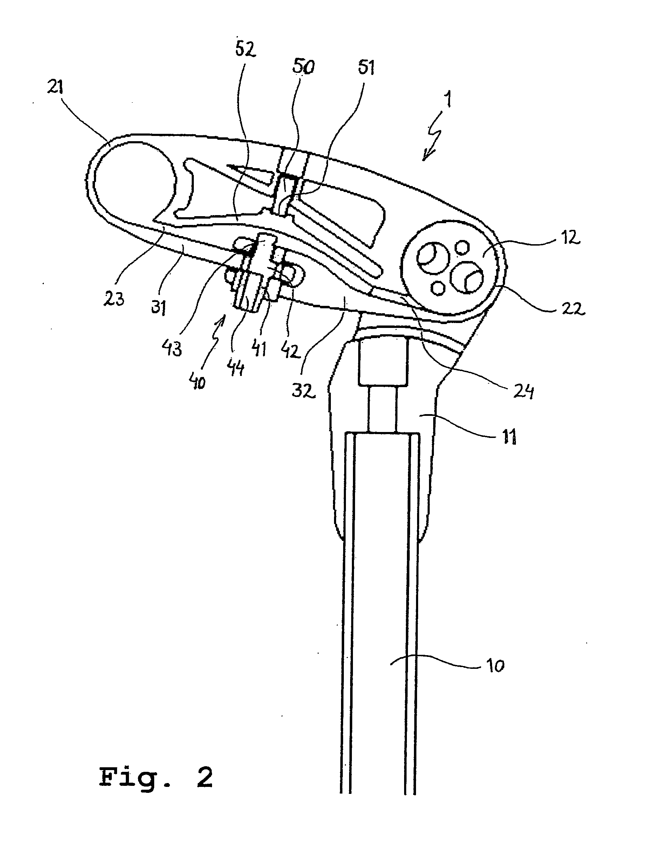

Figures 1-4 show a first preferred embodiment 1 of a coupling member according to the present invention. In addition, figures 1 and 2 show a portion of a pipe 10 of a bicycle fork rod. The pipe 10 is fixedly connected to the first coupling member 1 through a connection piece 11 and a cylindrical end 12. The cylindrical end 12 is fixed relative to the connection piece 11, whereas the connection piece 11 is fixedly connected to the pipe 10, for example by means of a bolt (not shown). Due to the fixed connection between the pipe 10 and the connection piece 11, and between the connection piece 11 and the end 12, the end 12 may be considered as end 12 of the bicycle fork rod.

On both sides, the first coupling member 1 is provided with straps 21, 22. A first strap 21 serves for receiving a bicycle steering rod (not shown in figures 1-4). A second strap 22 serves for receiving the end 12 of the bicycle fork rod. The straps 21, 22 are designed as bore holes, wherein an opening 23, 24 is arranged in the circumference of the bore holes. Central axes of these bore holes are substantially parallel to each other. A portion of the circumference of the first strap 21, which ends in the opening 23, continues in the tangential direction as first tangential arm 31, which extends in the direction of the second strap 22, starting from the first strap 21. A portion of the circumference of the second strap 22, which ends in the opening 24, continues in the tangential direction as second tangential arm 32, which extends in the direction of the first strap 21, starting from the second strap 22. An end 33 of the second tangential arm 32 is thickened with respect to the other portion of the second tangential arm 32, and is provided with a U-shaped recess 34 for receiving an end 35 of the first tangential arm 31. The dimensions of the recess 34 with respect to the dimensions of the end 35 of the first tangential arm 31 are chosen such that the end 35 is received in the recess 34 with play being present.

Figures 1-4 show the first coupling member 1 in a common orientation, wherein the tangential arms 31, 32 are located at a lower side of the first coupling member 1. In the further description of the first coupling member 1, this orientation will be used as a starting point, which in no way means that another orientation would not be possible.

In the following, portions of the thickened end 33 of the second tangential arm 32, which extend on both sides of the recess 34, are indicated as under arm end 36 and upper arm end 37, respectively.

The ends 33, 35 are interconnected by means of an eccentric member 40 which is accommodated in openings which are arranged in the ends 33, 35. The eccentric member 40 comprises three eccentric parts 41, 42, 43, wherein an under eccentric part 41 extends through the under arm end 36 of the second tangential arm 32, a centre eccentric part 42 extends through the end 35 of the first tangential arm 31, and an upper eccentric part 43 extends through the upper arm end 37 of the second tangential arm 32.

In the eccentric member 40, a bore hole 44 is arranged, which serves for receiving a fastening bolt or the like of an operating handle (not shown in figures 1-4). By means of such an operating handle, the eccentric member 40 can be easily rotated by a user.

Within the scope of the present invention, many alternatives are possible for the design of the ends 33, 35 of the tangential arms 31, 32. For example, an alternative is conceivable, wherein the end 35 of the first tangential arm 31 comprises arm ends extending on both sides of a recess, and wherein the end 33 of the second tangential arm 32 is accommodated in said recess with play being present.

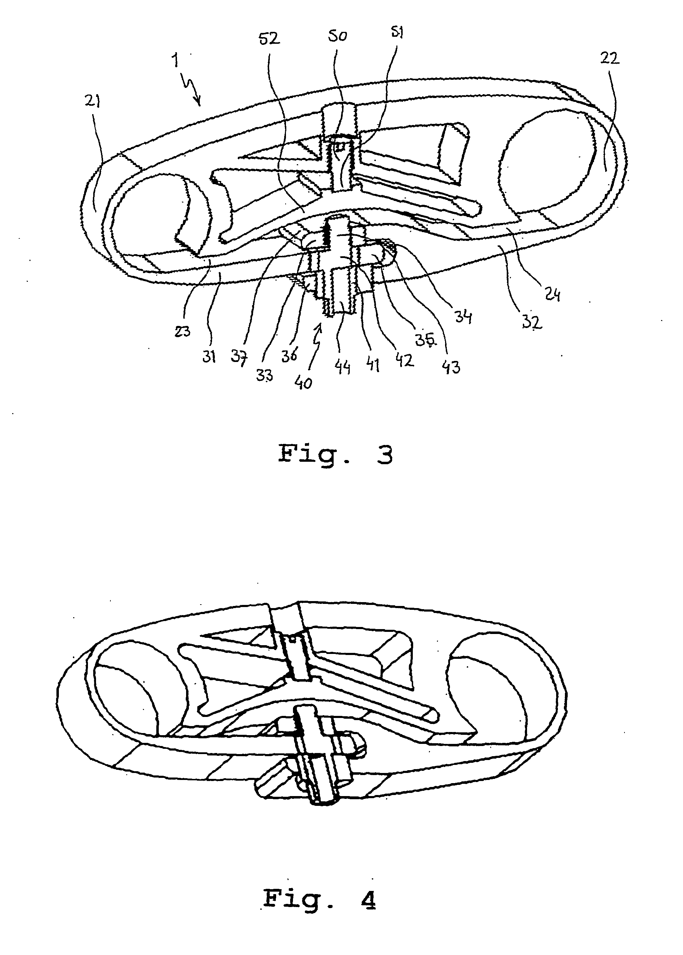

The operation of the eccentric member 40 will now be described on the basis of a comparison between figures 3 and 4. Figure 3 shows the first coupling member 1 having opened straps 21, 22. In this condition, inner diameter of the straps 21, 22 have such values that the bicycle steering rod and the end 12 of the bicycle fork rod, respectively, can be received in the straps 21, 22 with play being present. When the eccentric member 40 is subsequently rotated, the end 35 of the first tangential arm 31 is forced in the direction of the second strap 22, and the end 33 of the second tangential arm 32 is forced in the direction of the first strap 21, in other words, the tangential arms 31, 32 move in a direction toward each other. Due to this, the mutual position of the ends 33, 35 of the tangential arms 31, 32 is changed, which goes together with a decrease of the inner diameters of the straps 21, 22. When a bicycle steering rod and the end 12 of a bicycle fork rod, respectively, are accommodated in the straps 21, 22, it is thus achieved that the first strap 21 tightens around the bicycle steering rod, and that the second strap 22 tightens around the end 12 of the bicycle fork rod. In this condition, the bicycle steering rod and the bicycle fork rod are fixedly connected to each other by means of the first coupling member 1, and the positions of the bicycle steering rod and the bicycle fork rod are fixed with respect to each other. Figure 4 shows the first coupling member 1 having straps 21, 22 which are pulled to. Starting from this condition, the straps 21, 22 can be opened again by rotating the eccentric member 40 backward or forwards, wherein the tangential arms 31, 32 move in a direction away from each other.

The extent to which the eccentric member 40 is eccentric can be chosen such that the straps 21, 22 can be opened beyond a relieved condition. This is an important aspect of the present invention and an essential difference with respect to the state of the art, in which opening of the straps only takes place as a result of an elastic outward spring at the moment the tightening force of the tightening element is eliminated, wherein the elastic outward spring terminates as soon as the straps are in a relieved condition.

Like the coupling piece according to the state of the art, the first coupling member 1 is capable of receiving bicycle steering rods of which the outer diameter is smaller than the inner diameter of the first strap 21, and of receiving ends 12 of bicycle fork rod of which the outer diameter is smaller than the inner diameter of the second strap 22. By the fact that the straps 21, 22 can be opened beyond a relieved condition in the first coupling member 1 according to present invention, it is realised that the first coupling member 1 is also suitable for receiving a bicycle steering rod of which the outer diameter is equal to or larger than the inner diameter of the first strap 21 and/or an end 12 of a bicycle fork rod, the outer diameter of which end 12 is equal to or larger than the inner diameter of the second strap 22, within certain limits, of course. With respect to the state of the art, this is an expansion of the possible applications.

Because the straps 21, 22 can be opened, it is possible to provide large play between the straps 21, 22 and the bicycle steering rod which is to be received, and the end of the bicycle fork rod which is to be received, respectively. Consequently, it is possible to provide at least a portion of the straps 21, 22 and/or the bicycle steering rod and the end 12 of the bicycle fork rod, respectively, with a surface relief, so that the required clamping force may be lower, which results in lower required operating forces.

In the first coupling member 1 according to the present invention, a transmission ratio of the entirety of eccentric member 40 and operating handle can be relatively large. Due to this, a relatively low operating force is required at the moment the straps 21, 22 need to be opened.

In the case of the first coupling member 1 according to the present invention, it is possible to choose the inner diameter of the first strap 21 in the relieved condition such that this is smaller than the outer diameter of the bicycle steering rod which needs to be received. It is also possible to choose the inner diameter of the second strap 22 in the relieved condition such that this is smaller than the outer diameter of the end 12 of the bicycle fork rod which needs to be received. In the foregoing, this has already been indicated indirectly by means of the remark that the first coupling member 1 is suitable for receiving a bicycle steering rod and an end 12 of a bicycle fork rod, respectively, of which an outer diameter is larger than the inner diameter of the first strap 21 and the second strap 22, respectively.

When the choice regarding the inner diameters of the straps 21, 22 which is described in the proceeding paragraph is made, the straps 21, 22 need to be opened beyond the relieved condition for the purpose of mounting the first coupling member 1 on the end of a bicycle fork rod and connecting a bicycle steering rod to the first coupling member 1. In that case, elastic deformation of the straps 21, 22 occurs, wherein the straps 21, 22 are inclined to spring inwards to the relieved condition. When the position of the bicycle steering rod can be fixed relative to the bicycle fork rod, the load of the straps 21, 22 is eliminated, wherein the straps 21, 22 tighten around the bicycle steering rod and the end of the bicycle fork rod, respectively. After all, the straps 21, 22 are hindered by the bicycle steering rod and the end 12 of the bicycle fork rod, respectively, to spring inwards to the relieved condition, whereby the inclination of the straps 21, 22 to spring inwards is maintained. Consequently, a connection between the bicycle steering rod and the bicycle fork rod can only be broken when the straps 21, 22 are deliberately and under the exertion of force opened further with respect to the condition in which the straps 21, 22 enclose the bicycle steering rod and the end of the bicycle fork rod, respectively. This is an important advantage in view of the safety, because due to this, the bicycle steering rod can not unintendedly fall away with respect to the bicycle fork rod. As a result, no additional measures are required to ensure a certain fixed position of the bicycle steering rod relative to the bicycle fork rod.

It is possible to design the eccentric member 40 in such a way that, in an opened condition of the straps 21, 22, it is required to continually exert a force on the operating handle in order to maintain the opened condition of the straps 21, 22. In this way, an extra safety is built in, because due to this, it is prevented that the connection between the bicycle steering rod and the bicycle fork rod is unintendedly broken and remains broken.

Another important advantage of the embodiment of the first coupling member 1 in which the inner diameters of the straps 21, 22 are smaller than the outer diameters of the bicycle steering rod which needs to be received and the end 12 of the bicycle fork rod which needs to be received, respectively, is that the elastic tightening force of the straps 21, 22 contributes to the clamping connection between the first coupling member 1 and the bicycle steering rod, and the end 12 of the bicycle fork rod, respectively. Due to this, a lower dictated clamping force is required, whereby the operating force is relatively low.

When different manufactures of steering rod bends are applied, relatively large diameter tolerances on the one hand, and the requirement of building these in, in an optimal manner on the other hand, need to be accounted for. In order to adjust the clamping force in a simple manner in such a situation, the first coupling member 1 is provided with a tightening device, comprising a bolt 50 of which an under end 51 engages a central portion of a bent connection arm 52. At one side, the connection arm 52 extends to a portion of the circumference of the fist strap 21 which ends in the opening 23, and, on the other side, to a portion of the circumference of the second strap 22 which ends in the opening 24.

When the bolt 50 is tightened in the direction of the connection arm 52, the bold 50 exerts a downwardly directed force on the connection arm 52, which acts on the circumferences of the straps 21, 22, through the connection arm 52. When a bicycle steering rod and an end 12 of a bicycle fork rod, respectively, are accommodated in the straps 21, 22, the straps 21, 22 will be tightened around said bicycle steering rod and said end 12 of the bicycle fork rod due to this. In this respect, it is important that the bolt 50 is accommodated in a portion of the first coupling member 1 which is hard to deform, so that the force exerted by the bolt 50 actually causes an additional tightening force in the straps 21, 22.

Advantageously, the portion of the circumference of the first strap 21 which is engaged by the connection arm 52 has smaller dimensions than the portion of the circumference of the second strap 22 which is engaged by the connection arm 52, as can be seen in figures 2-4. In that case, a force which is exerted by the bolt 50 on the connection arm 52 will have more effect on the first strap 21 than on the second strap 22, so that the tightening force in the first strap 21 increases more than the tightening force in the second strap 22.

Alternatives are possible for the above-described tightening device. For example, the first tangential arm 31 and/or the second tangential arm 32 can be provided with a portion which is adjustable by means of a bolt.

Preferably, the first coupling member 1 is manufactured from metal. An advantage of the coupling member 1 which is shown in the figures 1-4 is that this can be manufactured in one piece, for example by means of extrusion, with the exception of the rotatable parts, i.e. the eccentric member 40 and the bolt 50. These parts are manufactured separately and put in the right position at a later stage.

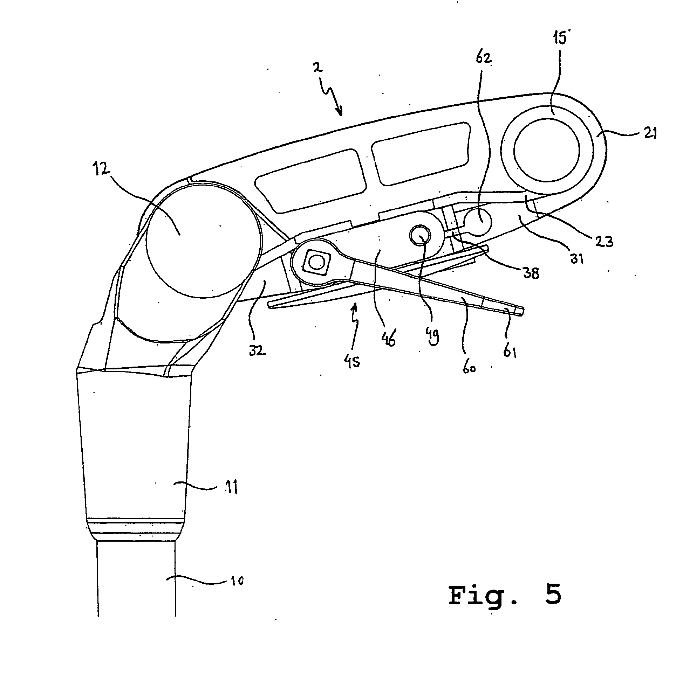

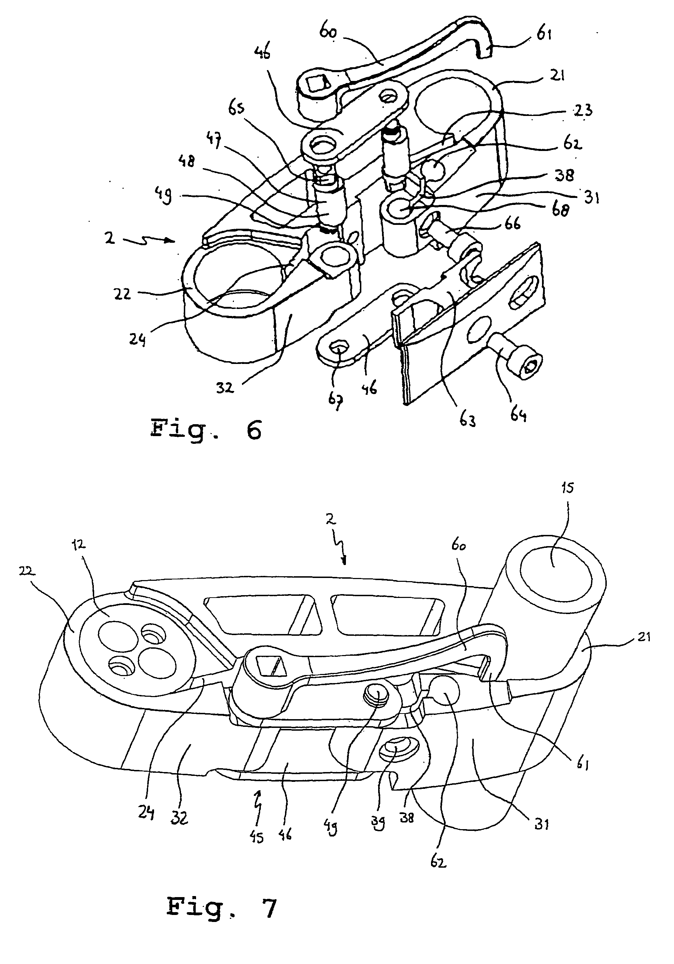

Figures 5-7 show a second preferred embodiment 2 of a coupling member according to the present invention. In addition, figure 5 shows a portion of a pipe 10 of a bicycle fork rod and a connection piece 11, like the figures 1 and 2, which are already discussed. Figure 5 also shows a section of a bicycle steering rod 15 which is accommodated in the second coupling member 2. Figure 7 shows a view of a cylindrical end 12 of the bicycle fork rod and a portion of the bicycle steering rod 15.

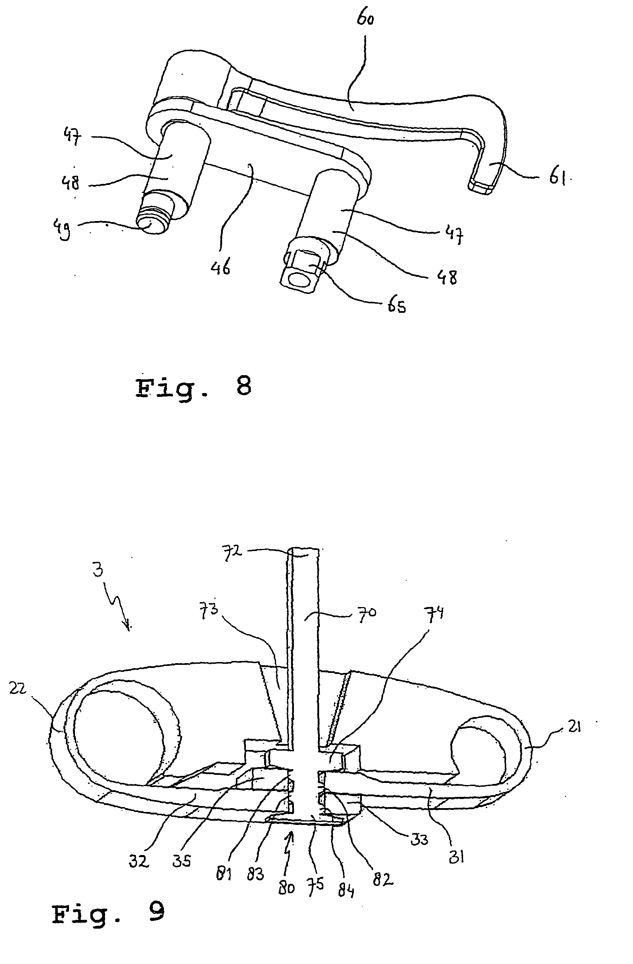

The second coupling member 2 comprises an eccentric device 45 having two guiding arms 46. Figure 8 shows a portion of the eccentric device 45 in more detail. A first tangential arm 31 extending from the first strap 21 and a second tangential arm 32 extending from the second strap 22 are interconnected by means of the guiding arms 46, wherein the guiding arms 46 extend on both sides of the tangential arms 31, 32. A connection between the guiding arms 46 and the tangential arms 31, 32 is realised by means of pins 47, comprising a pin body 48 which, at both ends, is provided with an eccentric rod 49, wherein a central axis of said eccentric rod 49 and a central axis of the pin body 48 do extend parallel with respect to each other, but do not establish a continuation of each other. The pin body 48 extends in the tangential arm 31, 32, whereas the eccentric rods 49 extend in openings 67 which are arranged in the guiding arms 46.

The guiding arms 46 are connected to the pins 47 by means of a combination of an operating handle 60 which is fixedly connected to an eccentric rod 49 of one of both pins 47, and a nut 65 which is fixedly connected to an eccentric rod 49 of another of both pins 47, wherein said eccentric rods 49 are located on both sides of the tangential arms 31, 32.

In the shown example, the eccentric device 45 is adjustable, because the position of a pin 47 which is present in the first tangential arm 31 can be adjusted. The pin 47 is clamped in an opening 68 in the first tangential arm 31, wherein a bolt 66 extends through a saw cut 38 which is in communication with the opening 68. For the purpose of receiving the bolt 66, the first tangential arm 31 is provided with an opening 39. It will be clear that the position of the pin 47, in particular the position of the eccentric rods 49 of the pin 47, can be adjusted by loosening the bolt 66, rotating the pin 47 until a desired position is reached, and subsequently tightening the bolt 66 again.

The operating handle 60 is capable of springing in a sideward direction, which is a direction in which the pins 47 extend. In a position of rest, a free end 61 is accommodated in a recess 62 which is located in the first tangential arm 31. In figure 7, the operating handle 60 is shown in a condition in which the free end 61 is moved out of the recess 62 in the sideward direction. An important advantage of this embodiment is that the operating handle 60 can not be unintendedly put to another condition than the position of rest, because the operating handle 60 needs to be lifted from the recess 62 first. The position of rest of the operating handle 60 corresponds to a condition in which the straps 21, 22 are tightened around the bicycle steering rod 15 and the end 12 of the bicycle fork rod, respectively.

Possibly, the second coupling member 2 can be provided with a cosmetic covering. In that case, the recess 62 can be arranged in the covering.

It is not essential that the operating handle 60 is capable of springing in the sideward direction. In an alternative embodiment, the recess 62 can be arranged in an elastic portion of the second coupling member 2 of the covering, which portion can be pushed away to release the free end 61 of the operating handle 60.

According to an important aspect of the present invention, the tangential arms 31, 32 can be moved toward each other and away from each other, wherein the straps 21, 22 can be opened beyond a relieved condition. The desired condition of the straps 21, 22 can be established in a simple manner by adjusting the position of the operating handle 60. As has been mentioned in the above, a position of rest of the operating handle 60 corresponds to a condition in which the straps 21, 22 are tightened around the bicycle steering rod 15 and the end 12 of the bicycle fork rod, respectively. Starting from this condition, when the free end 61 of the operating handle 60 is lifted from the recess 62, and the operating handle 60 is moved downwardly, the tightening force exerted by the straps 21, 22 decreases. When the operating handle 60 is more and more rotated further, the straps 21, 22 are finally opened and play arises between the straps 21, 22 and the bicycle steering rod 15 and the end 12 of the bicycle fork rod, respectively.

Because the first coupling member 1 and the second coupling member 2 are preferred embodiments of the present invention, said coupling members 1, 2 have many similarities, in particular regarding the operation. For example, with respect to the second coupling member 2, it is also possible to choose the inner diameter of the first strap 21 in the relieved condition such that this is smaller than the outer diameter of the bicycle steering rod 15 which needs to be received, and to choose the inner diameter of the second strap 22 in the relieved condition such that this is smaller than the outer diameter of the end 12 of the bicycle fork rod which needs to be received. This is a result of the fact that the second coupling member 2 is adapted to open the straps 21, 22 beyond a relieved condition, in accordance with an important aspect of the present invention. In the case of the first coupling member 1, the eccentric member 40 is provided to open the straps 21, 22 and pull the straps 21, 22 to, through the tangential arms 31, 32, and in the case of the second coupling member 2, the eccentric device 45 is provided to open the straps 21, 22 and pull the straps 21, 22 to, through the tangential arms 31, 32.

An advantage of the second coupling member 2 relates to the adjustability of the eccentric device 45. Due to this, a right clamping force can be established in the straps 21, 22, wherein the required operating force can be kept relatively low.

Another advantage of the second coupling member 2 is that the eccentric device 45, together with the tangential arms 31, 32, functions as a four-bar mechanism, wherein ends of the tangential arms 31, 32 are slidable in a guide 63, which ensures that a movement of the tangential arms 31, 32 substantially takes place in a tangential direction. For example, the guide 63 is fixedly connected to a portion of the second coupling member 2 which comprises the straps 21, 22 and the tangential arms 31, 32, by means of a bolt 64.

As a result of the above-mentioned operation as a four-bar mechanism, during the process of pulling the straps 21, 22 to, a relatively large transmission ratio is realised between an angle of rotation of the operating handle 60 and a movement of the ends of the tangential arms 31, 32, whereas, during opening of the straps 21, 22, a relatively small transmission ration is realised between the angle of rotation of the operating handle 60 and the movement of the ends of the tangential arms 31, 32. A small length of the guiding arm 46 is good for obtaining an as strong as possible effect on the basis of this difference of transmission ratio.

It will be clear to a person skilled in the art that the scope of the present invention is not limited to the examples discussed above, but that several amendments and modifications thereof are possible without deviating from the scope of the invention as defined in the appended claims.

It is not necessary that the coupling member 1, 2 according to the present invention is provided with an eccentric member 40 or an eccentric device 45 to move the tangential arms 31, 32 toward each other and away from each other. Many alternatives are possible, of which a screw spindle having left-handed screw thread and right-handed screw thread is an example.

Figure 9 shows a third preferred embodiment 3 of a coupling member according to the present invention, wherein the mutual movement of the tangential arms 31, 32 is realised by means of a lever 70. In the shown example, the ends 33, 35 of the tangential arms 31, 32 extend next to each other, wherein the end 35 of the first tangential arm 31 is located above the end 33 of the second tangential arm 32. The ends 33, 35 are provided with an opening for receiving an operating portion 80 of the lever 70.

In a longitudinal direction, the lever 70 of the third coupling member 3 is tiltable, wherein the third coupling member 3 comprises a recess 73 for allowing such a tilting movement. The lever 70 comprises an upper roll-guiding piece 74 and an under roll-guiding piece 75. These roll-guiding pieces 74, 75 are partially bent, so that the lever 70 may roll on both the first tangential arm 31 and the second tangential arm 32 during a tilting movement. It will be clear that the lever 70 can be composed of more portions, which are positioned in the right place and subsequently attached to each other during assembly.

The operating portion 80 of the lever 70, which is accommodated in the openings in the ends 33, 35 of the tangential arms 31, 32, comprises four cams 81, 82, 83, 84, wherein a first cam 81 is located in the opening in the end 35 of the first tangential arm 31, a second cam 82 is also located in said opening, below the first cam 81, a third cam 83 is located in the opening in the end 33 of the second tangential arm 32, below the second cam 82, and a fourth cam 84 is also located in said opening, below the third cam 83. The cams 81, 82, 83, 84 are bent, whereby they are suitable for rolling over an inner surface of the openings in the ends 33, 35 of the tangential arms 31, 32.

When an upper end 72 of the lever 70 is moved in the direction of the first strap 21, the straps 21, 22 are opened. When the end 72 of the lever 70 is moved in the opposite direction, i.e. in the direction of the second strap 22, the straps 21, 22 are pulled to. In the shown example, the transmission ration for opening the straps 21, 22 is determined by the distance between the second cam 82 and the third cam 83, whereas the transmission ratio for pulling the straps 21, 22 to is determined by the distance between the first cam 81 and the fourth cam 84. As the first-mentioned distance is smaller than the second-mentioned distance, the transmission ratio for opening the straps 21, 22 is smaller than the transmission ratio for pulling the straps 21, 22 to. Consequently, the operating force which is exerted on the end 72 of the lever 70 can be lower during pulling the straps 21, 22 to than during opening the straps 21, 22.

It will be clear that the first tangential arm 31 can be located below the second tangential arm 32. However, the shown configuration, in which the first tangential arm 31 is located above the second tangential arm 32, is preferred, because the relieved inner diameter of the first strap 21 is usually smaller than the relieved inner diameter of the second strap 22.

An advantage of applying the lever 70 is that the operation thereof requires less force than the operation of an eccentric member, for example. This is a result of the fact that less friction is present, at least in the shown case in which the lever 70 has partially bent roll-guiding pieces 74, 75 and in which the cams 81, 82, 83, 84 are also bent.

Preferably, when the third coupling member 3 is applied, measures are taken to fix the position of the lever 70, for example in the situation that the straps 21, 22 are opened beyond the relieved condition.

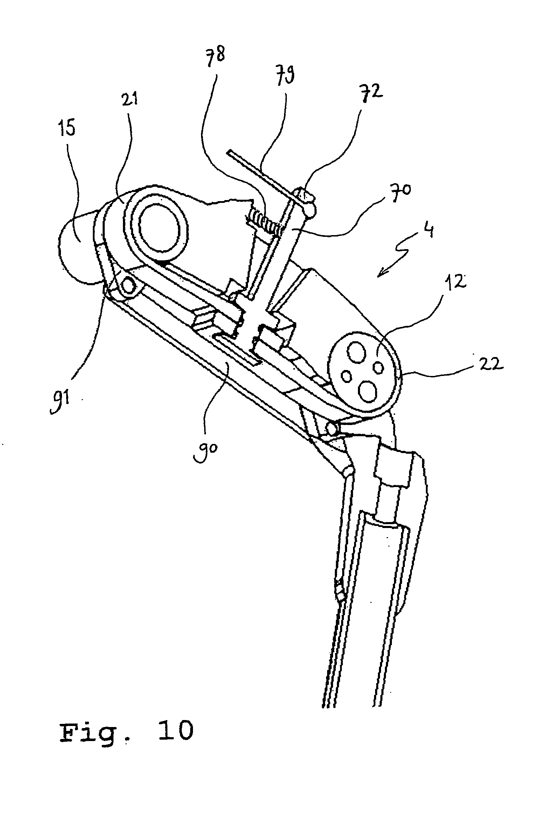

Figure 10 shows a fourth preferred embodiment 4 of a coupling member according to the present invention. Like the third coupling member 3, the fourth coupling member 4 comprises a lever 70. A difference between the third coupling member 3 and the fourth coupling member 4 relates to the position of the lever 70, wherein the lever 70 of the fourth coupling member 4 is rotated 180° in comparison with the lever 70 of the third coupling member 3. By means of this position of the lever 70, an advantageous distribution of the transmission ratios is obtained, wherein the transmission ratio for opening the straps 21, 22 is larger than the transmission ratio for pulling the straps 21, 22 to.

It is advantageous to provide the lever 70 with a prestress, wherein sufficient force is exerted on the straps 21, 22 to tighten the fourth coupling member 4 on the bicycle steering rod 15 and the end 12 of the bicycle fork rod, respectively, in a reliable manner. In the case of the fourth coupling member 4, the lever 70 is prestressed by means of a compression spring 78. Naturally, any other suitable prestressing element may be applied.

An advantageous effect of prestressing the lever 70 is that it is sufficient to only exert a tensile force on the lever 70 for the purpose of bringing about a disengagement, wherein, in the shown example, a remote control having a Bowden cable is applied. In figure 10, an end portion of the Bowden cable is shown and indicated by the reference numeral 79. The end portion 79 of the Bowden cable is connected to the upper end 72 of the lever 70. In a relieved condition of the Bowden cable, the fourth coupling member 4 is always in a condition in which the straps 21, 22 are tightened around the bicycle steering rod 15 and the end 12 of the bicycle fork rod, respectively, due to the force exerted by the compression spring 78. Only for the purpose of opening the straps 21, 22, it is necessary to exert an operating force on the lever 70, through the Bowden cable.

In figure 10, a coupling rod 90 is shown, which is rotatably connected to the bicycle fork rod on the one hand, and which is rotatably connected to the bicycle steering rod 15, through a short arm 91, on the other hand. In this configuration, the coupling rod 90, the short arm 91, the fourth coupling member 4 and the bicycle fork rod form a assembly having the shape of a parallelogram, wherein the centre-to-centre distance of rotation axes of the coupling rod 90 is about as large as the centre-to-centre distance of the straps 21, 22 of the fourth coupling member 4. The coupling rod 90 guarantees an ergonomic position of the bicycle steering rod 15 and the operating members for breaks and the like which are present thereon.

The bicycle fork rod can be provided with two stop screws, wherein positions of said stop screws correspond to two defined extreme positions of the coupling member 1, 2, 3, 4. In this way, the coupling member 1, 2, 3, 4 can be easily adjusted between the two extreme positions. Preferably, the positions of the stop screws are adjustable, so that a user is capable of choosing the extreme positions and changing these positions, if so desired. Application of the stop screws is especially advantageous for mountain bikes, because, due to this, it is possible to establish a desired position of the bicycle steering rod in a simple manner. In that case, dependent of the desires of a user, it is easy to put the bicycle steering rod from a rather horizontal position to a rather vertical position, and vice versa. In the case of an application of a remote control, the operation is very simple. In such a case, the only thing that a user needs to do is activate the remote control, change the position of the bicycle steering rod relative to the bicycle fork rod, and subsequently deactivate the remote control.

Thus, the present invention provides a coupling member 1, 2, 3, 4 for interconnecting a bicycle steering rod 15 and a bicycle fork rod. The coupling member 1, 2, 3, 4 is provided with a first strap 21 for receiving the bicycle steering rod 15 on the one hand, and is provided with a second strap 22 for receiving an end 12 of the bicycle fork rod on the other hand. Inner diameters of the straps 21, 22 are adjustable by means of an adjusting device, wherein the position of said adjusting device determines the mutual position of tangential arms 31, 32 extending from a circumference of the straps 21, 22. According to an important aspect of the present invention, the straps 21, 22 can be opened beyond a relieved condition.

## Claims

1. Coupling member (1, 2, 3, 4) for interconnecting a bicycle steering rod (15) and a bicycle fork rod, which coupling member (1, 2, 3, 4) is provided with a first strap (21) for receiving the bicycle steering rod (15) on the one hand, and is provided with a second strap (22) for receiving an end (12) of the bicycle fork rod on the other hand, wherein inner diameters of the straps (21, 22) are adjustable by means of an adjusting device, **characterised in that** the adjusting device is adapted to bring about an increase of the inner diameters of the straps (21, 22) when activated from a position which corresponds to a relieved condition of the straps (21, 22).

2. Coupling member (1, 2, 3, 4) according to claim 1, wherein the adjusting device is activatable in two directions when starting from the position which corresponds to the relieved condition of the straps (21, 22), wherein the adjusting device is adapted to bring about a decrease of the inner diameters of the straps (21, 22) on activation in a first direction, and to bring about an increase of the inner diameters of the straps (21, 22) on activation in a second direction.

3. Coupling member (1, 2, 3, 4) according to claim 1 or 2, wherein a transmission ratio which is applicable to the case in which the inner diameters of the straps (21, 22) are increased differs from a transmission ratio which is applicable to the case in which the diameters of the straps (21, 22) are decreased.

4. Coupling member (1, 2, 3, 4) according to any of claims 1-3, wherein, in the tangential direction, a portion of a circumference of the first strap (21) continues as a first tangential arm (31), and wherein, in the tangential direction, a portion of the circumference of the second strap (22) continues as a second tangential arm (32).

5. Coupling member (1) according to claim 4, wherein an end (33) of one of the tangential arms (31, 32) is thickened and comprises a recess (34) for receiving an end (35) of another of the tangential arms (31, 32).

6. Coupling member (1) according to claim 4 or 5, wherein the adjusting device comprises an eccentric member (40) which is rotatably accommodated in openings in ends (33, 35) of the tangential arms (31, 32).

7. Coupling member (2) according to claim 4, wherein the tangential arms (31, 32) are interconnected by means of guiding arms (46), wherein a connection between the guiding arms (46) and the tangential arms (31, 32) is realised by means of pins (47) which at both ends are provided with an eccentric rod (49).

8. Coupling member (2) according to claim 7, wherein a pin (47) is accommodated in an opening (68) in one of the tangential arms (31, 32), wherein an inner diameter of said opening (68) is adjustable.

9. Coupling member (2) according to claim 7 or 8, wherein ends of the tangential arms (31, 32) are slidable in a guide (63), which preferably ensures that a movement of the tangential arms (31, 32) substantially takes place in the tangential direction.

10. Coupling member (2) according to any of claims 1-9, comprising an operating handle (60) for operating the adjusting device, wherein the coupling member (2) is provided with a recess (62) for receiving a free end (61) of the operating handle (60), and wherein at least one of a portion of the coupling member (2) in which the recess (62) is arranged and the operating handle (60) is designed such as to be elastic in the sideward direction.

11. Coupling member (3) according to claim 4, wherein the adjusting device comprises a lever (70), which is provided with cams (81, 82, 83, 84) which are located in openings in ends (33, 35) of the tangential arms (31, 32).

12. Coupling member (3) according to claim 11, wherein the lever (70) is prestressed by means of a spring, wherein a prestressed position of the lever (70) corresponds to a condition of the straps (21, 22) in which the straps (21, 22) are pulled to, and wherein it is only necessary to exert an operating force in one direction on the lever (70) for the purpose of opening the straps (21, 22).

13. Assembly of a bicycle steering rod (15) and a bicycle fork rod, wherein the bicycle steering rod (15) and an end (12) of the bicycle fork rod are interconnected by means of a coupling member (1, 2, 3, 4) according to any of claims 1-12.

14. Assembly according to claim 13, wherein the inner diameter of the first strap (21) of the coupling member (1, 2, 3, 4) in a relieved condition of said first strap (21) is smaller than an outer diameter of the bicycle steering rod (15), and wherein the inner diameter of the second strap (22) of the coupling member (1, 2, 3, 4) in a relieved condition of said second strap (22) is smaller than an outer diameter of the end (12) of the bicycle fork rod.

15. Assembly according to claim 14, wherein a clamping force which in an unloaded condition is exerted by the straps (21, 22) on the bicycle steering rod (15) and the end (12) of the bicycle fork rod, respectively, is determined by the bending stiffness of the straps (21, 22), which for its part is determined by a wall thickness of the straps (21, 22), and by the difference between the inner diameters of the straps (21, 22) in a relieved condition and the outer diameters of the bicycle steering rod (15) and the end (12) of the bicycle fork rod, respectively.

16. Assembly according to any of claims 13-15, wherein at least a portion of at least one of the straps (21, 22), the bicycle steering rod (15) and the end (12) of the bicycle fork rod is provided with a surface relief.

17. Assembly according to any of claims 13-16, wherein the adjusting device of the coupling member (1, 2, 3, 4) is operable from a handgrip of the bicycle steering rod (15), wherein preferably a Bowden cable or a pull-push rod is applied.

18. Assembly according to any of claims 13-17, wherein the position of the bicycle steering rod (15) relative to the bicycle fork rod is ensured by means of a coupling rod (90) which is rotatably connected to the bicycle fork rod on the one hand and to the bicycle steering rod (15), through an arm (91), on the other hand, wherein a centre-to-centre distance of rotation axes of the coupling rod (90) substantially is as large as a centre-to-centre distance of the straps (21, 22).

19. Assembly according to any of claims 13-18, wherein the bicycle fork rod is provided with two stop screws, wherein positions of said stop screws correspond to two defined extreme positions of the coupling member (1, 2, 3, 4), and wherein preferably the positions of the stop screws are adjustable.

20. Bicycle, provided with a coupling member (1, 2, 3, 4) according to any of claims 1-12.

21. Bicycle, provided with an assembly according to any of claims 13-19.

## Patentansprüche

1. Verbindungsbauteil (1, 2, 3, 4) zur Verbindung einer Fahrradlenkstange (15) und eines Fahrradgabelschafts, wobei das Verbindungsbauteil (1, 2, 3, 4) einerseits mit einem ersten Bügel (21) zur Aufnahme der Fahrradlenkstange (15) und andererseits mit einem zweiten Bügel (22) zur Aufnahme eines Endes (12) des Fahrradgabelschafts versehen ist, wobei die inneren Durchmesser der Bügel (21, 22) mittels einer Einstellungsvorrichtung verstellbar sind, **dadurch gekennzeichnet, dass** die Einstellungsvorrichtung ausgestaltet ist, um eine Vergrößerung der inneren Durchmesser der Bügel (21, 22) zu bewirken, wenn sie aus einer Position betätigt wird, die mit einer entspannten Stellung der Bügel (21, 22) übereinstimmt.

2. Verbindungsbauteil (1, 2, 3, 4) nach Anspruch 1, in dem die Einstellungsvorrichtung in zwei Richtungen ausgehend von der Position betätigbar ist, die mit dem entspannten Zustand der Bügel (21, 22) übereinstimmt, wobei die Einstellungsvorrichtung ausgestaltet ist, um einer Verringerung der inneren Durchmesser der Bügel (21, 22) bei einer Aktivierung in eine erste Richtung und eine Erhöhung der inneren Durchmesser der Bügel (21, 22) bei einer Aktivierung in eine zweite Richtung zu bewirken.

3. Verbindungsbauteil (1, 2, 3, 4) nach Anspruch 1 oder 2, in dem sich ein Übersetzungsverhältnis, welches anwendbar ist auf den Fall, indem sich die inneren Durchmesser der Bügel (21, 22) verringern, von einem Übersetzungsverhältnis unterscheidet, das anwendbar ist in dem Fall, in welchem sich die Durchmesser der Bügel (21, 22) verkleinern.

4. Verbindungsbauteil (1, 2, 3, 4) nach irgendeinem der Ansprüche 1 bis 3, in dem in tangentialer Richtung ein Teil eines Kreisumfangs des ersten Bügels (21) sich als ein erster tangentialer Arm (31) fortsetzt und in dem in tangentialer Richtung ein Teil des Kreisumfanges des zweiten Bügels (22) sich als ein zweiter tangentialer Arm (32) fortsetzt.

5. Verbindungsbauteil (1) nach Anspruch 4, in dem eine Ende (33) eines der tangentialen Arme (31, 32) verdickt ist und eine Ausnehmung (34) zur Aufnahme eines Endes (35) eines anderen der tangentialen Arme (31, 32) umfasst.

6. Verbindungsbauteil (1) nach Anspruch 4 oder 5, in dem die Einstellungsvorrichtung ein Exzenterbauteil (40) umfasst, welches drehbar in Öffnungen in Enden (33, 35) der tangentialen Arme (31, 32) aufgenommen ist.

7. Verbindungsbauteil (2) nach Anspruch 4, in dem die tangentialen Arme (31, 32) mittels Führungsarmen (46) verbunden sind, wobei eine Verbindung zwischen den Führungsarmen (46) und den tangentialen Armen (31, 32) mittels Stiften (47) erfolgt, welche an beiden Enden mit einer Exzenterstange (49) versehen sind.

8. Verbindungsbauteil (2) nach Anspruch 7, in dem ein Stift (47) in einer Öffnung (68) in einer der tangentialen Arme (31, 32) aufgenommen ist, wobei ein innerer Durchmesser der Öffnung (68) einstellbar ist.

9. Verbindungsbauteil (2) nach Anspruch 7 oder 8, in dem Enden der tangentialen Arme (31, 32) in einer Führung (63) verschiebbar sind, was vorzugsweise sicher stellt, dass eine Bewegung der tangentialen Arme (31, 32) im wesentlichen in einer tangentialen Richtung stattfindet.

10. Verbindungsbauteil (2) nach irgendeinem der Ansprüche 1 bis 9, umfassend einen Betätigungsgriff (60) zur Betätigung der Einstellungsvorrichtung, wobei das Verbindungsbauteil (2) mit einer Ausnehmung (62) zur Aufnahme eines freien Endes (61) des Betätigungsgriffs (60) versehen ist, und in dem mindestens ein Teil des Verbindungsbauteils (2), in welchem die Ausnehmung (62) angeordnet ist und der Betätigungsgriff (60) so ausgestaltet sind, um in einer seitwärts gerichteten Richtung elastisch zu sein.

11. Verbindungsbauteil (3) nach Anspruch 4, in dem die Einstellvorrichtung einen Hebel (70) umfasst, welcher mit Nocken (81, 82, 83, 84) versehen ist, welche in Öffnungen in Enden (33, 35) dertangentialen Arme (31, 32) angeordnet sind.

12. Verbindungsbauteil (3) nach Anspruch 11, in dem der Hebel (70) mittels einer Feder vorgespannt ist, wobei eine vorgespannte Position des Hebels (70) mit einem Zustand der Bügel (21, 22) übereinstimmt, in welchem die Bügel (21, 22) zugezogen sind, und in welchem es lediglich notwendig ist, eine Betätigungskraft in einer Richtung auf den Hebel (70) zum Zwecke der Öffnung der Bügel (21, 22) aufzubringen.

13. Anordnung einer Fahrradlenkstange (15) und eines Fahrradgabelschafts, in der die Fahrradlenkstange (15) und ein Ende (12) des Fahrradgabelschafts mittels eines Verbindungsbauteils (1, 2, 3, 4) nach irgendeinem der Ansprüche 1 bis 12 verbunden sind.

14. Anordnung nach Anspruch 13, in der der innere Durchmesser des ersten Bügels (21) des Verbindungsbauteils (1, 2, 3, 4) in einem entspannten Zustand des ersten Bügels (21) kleiner ist als ein äußerer Durchmesser der Fahrradlenkstange (15) und in der der innere Durchmesser des zweiten Bügels (22) des Verbindungsbauteils (1, 2, 3, 4) in einem entspannten Zustand des zweiten Bügels (22) kleiner ist als ein äußerer Durchmesser des Endes (12) des Fahrradgabelschafts.

15. Anordnung nach Anspruch 14, in der eine Klemmkraft, welche in einen unbelasteten Zustand durch die Bügel (21, 22) auf die Fahrradlenkstange (15) beziehungsweise das Ende (12) des Fahrradgabelschafts ausgeübt wird, durch die Biegesteifheit der Bügel (21, 22) bestimmt wird, welche für ihren Teil durch eine Wanddicke der Bügel (21, 22) und durch den Unterschied zwischen den inneren Durchmessern der Bügel (21, 22) in einem entspannten Zustand und den äußeren Durchmessern der Fahrradlenkstange (15) beziehungsweise dem Ende (12) des Fahrradgabelschafts bestimmt wird.

16. Anordnung nach irgendeinem der Ansprüche 13 bis 15, in der zumindest ein Teil mindestens einer der Bügel (21, 22), die Fahrradlenkstange (15) und das Ende (12) des Fahrradgabelschafts mit einem Oberflächenrelief versehen ist.

17. Anordnung nach irgendeinem der Ansprüche 13 bis 16, in der die Einstellungsvorrichtung des Verbindungsbauteils (1, 2, 3, 4) von einem Handgriff der Fahrradlenkstange (15) aus betreibbar ist, wobei vorzugsweise ein Bowdenzug oder eine Zug-Schubstange verwendet wird.

18. Anordnung nach irgendeinem der Ansprüche 13 bis 17, in der die Position der Fahrradlenkstange (15) relativ zu dem Fahrradgabelschaft mittels einer Koppelstange (90) sicher gestellt ist, welche einerseits drehbar mit dem Fahrradgabelschaft und andererseits durch einen Arm (91) mit der Fahrradlenkstange (15) verbunden ist, wobei ein Mittelpunkt zu Mittelpunkt Abstand der Drehachsen der Koppelstange (90) im wesentlichen so groß ist wie ein Mittelpunkt zu Mittelpunkt Abstand der Bügel (21, 22).

19. Anordnung nach irgendeinem der Ansprüche 13 bis 18, in der der Fahrradgabelschaft mit zwei Stoppschrauben versehen ist, wobei die Positionen der Stoppschrauben mit zwei definierten extremen Positionen des Verbindungsbauteils (1, 2, 3, 4) übereinstimmen und wobei vorzugsweise die Positionen der Stoppschrauben einstellbar sind.

20. Fahrrad mit einem Verbindungsbauteil (1, 2, 3, 4) nach irgendeinem der Ansprüche 1 bis 12.

21. Fahrrad mit einer Anordnung nach irgendeinem der Ansprüche 13 bis 19.

## Revendications

1. Elément d'accouplement (1, 2, 3, 4) pour interconnecter un guidon de bicyclette (15) et une tige de fourche de bicyclette, lequel élément d'accouplement (1, 2, 3, 4) est pourvu d'une première sangle (21) destinée à recevoir le guidon de bicyclette (15) d'une part, et est pourvu d'une deuxième sangle (22) destinée à recevoir une extrémité (12) de la tige de fourche de bicyclette d'autre part, dans lequel les diamètres intérieurs des sangles (21, 22) sont réglables au moyen d'un dispositif de réglage, **caractérisé en ce que** le dispositif de réglage est adapté pour provoquer une augmentation des diamètres intérieurs des sangles (21, 22) quand il est actionné à partir d'une position qui correspond à un état relâché des sangles (21, 22).

2. Elément d'accouplement (1, 2, 3, 4) selon la revendication 1, dans lequel le dispositif de réglage peut être actionné dans deux directions en partant de la position qui correspond à l'état relâché des sangles (21, 22), dans lequel le dispositif de réglage est adapté pour provoquer une réduction des diamètres intérieurs des sangles (21, 22) lors de l'actionnement dans une première direction, et pour provoquer une augmentation des diamètres intérieurs des sangles (21, 22) lors de l'actionnement dans une deuxième direction.

3. Elément d'accouplement (1, 2, 3, 4) selon la revendication 1 ou 2, dans lequel un rapport de transmission qui est applicable au cas dans lequel les diamètres intérieurs des sangles (21, 22) sont augmentés diffère d'un rapport de transmission qui est applicable au cas dans lequel les diamètres des sangles (21, 22) sont réduits.

4. Elément d'accouplement (1, 2, 3, 4) selon l'une quelconque des revendications 1 à 3, dans lequel, dans la direction tangentielle, une partie d'une circonférence de la première sangle (21) continue en tant que premier bras tangentiel (31), et dans lequel, dans la direction tangentielle, une partie de la circonférence de la deuxième sangle (22) continue en tant que deuxième bras tangentiel (32).

5. Elément d'accouplement (1) selon la revendication 4, dans lequel une extrémité (33) de l'un des bras tangentiels (31, 32) est plus épaisse et comprend un évidement (34) destiné à recevoir une extrémité (35) d'un autre des bras tangentiels (31, 32).

6. Elément d'accouplement (1) selon la revendication 4 ou 5, dans lequel le dispositif de réglage comprend un élément excentrique (40) qui est logé à rotation dans des ouvertures prévues dans des extrémités (33, 35) des bras tangentiels (31, 32).

7. Elément d'accouplement (2) selon la revendication 4, dans lequel les bras tangentiels (31, 32) sont interconnectés au moyen de bras de guidage (46), dans lequel une connexion entre les bras de guidage (46) et les bras tangentiels (31, 32) est réalisée grâce à des axes (47) qui, en leurs deux extrémités, sont pourvus d'une tige excentrique (49).

8. Elément d'accouplement (2) selon la revendication 7, dans lequel un axe (47) est logé dans une ouverture (68) prévue dans l'un des bras tangentiels (31, 32), un diamètre intérieur de ladite ouverture (68) étant réglable.

9. Elément d'accouplement (2) selon la revendication 7 ou 8, dans lequel les extrémités des bras tangentiels (31, 32) peuvent glisser dans un guide (63), lequel assure de préférence qu'un mouvement des bras tangentiels (31, 32) se produit sensiblement dans la direction tangentielle.

10. Elément d'accouplement (2) selon l'une quelconque des revendications 1 à 9, comprenant une poignée d'actionnement (60) pour actionner le dispositif de réglage, dans lequel l'élément d'accouplement (2) est pourvu d'un évidement (62) destiné à recevoir une extrémité libre (61) de la poignée d'actionnement (60), et dans lequel au moins un élément parmi une partie de l'élément d'accouplement (2) dans laquelle est disposé l'évidement (62) et la poignée d'actionnement (60) est conçue pour être élastique dans la direction latérale.

11. Elément d'accouplement (3) selon la revendication 4, dans lequel le dispositif de réglage comprend un levier (701), qui est muni de cames (81, 82, 83, 84) qui sont situées dans des ouvertures prévues dans les extrémités (33, 35) des bras tangentiels (31, 32).

12. Elément d'accouplement (3) selon la revendication 11, dans lequel le levier (70) est précontraint au moyen d'un ressort, dans lequel une position précontrainte du levier (70) correspond à un état des sangles (21, 22) dans lequel les sangles (21, 22) sont tirées, et dans lequel il n'est nécessaire que d'exercer une force d'ouverture dans une direction sur le levier (70) dans le but d'ouvrir les sangles (21, 22).

13. Ensemble d'un guidon de bicyclette (15) et d'une tige de fourche de bicyclette, dans lequel le guidon de bicyclette (15) et une extrémité (12) de la tige de fourche de bicyclette sont interconnectés au moyen d'un élément d'accouplement (1, 2, 3, 4) selon l'une quelconque des revendications 1 à 12.

14. Ensemble selon la revendication 13, dans lequel le diamètre intérieur de la première sangle (21) de l'élément d'accouplement (1, 2, 3, 4) dans un état relâché de ladite première sangle (21) est inférieur à un diamètre extérieur du guidon de bicyclette (15), et dans lequel le diamètre intérieur de la deuxième sangle (22) de l'élément d'accouplement (1, 2, 3, 4) dans un état relâché de ladite deuxième sangle (22) est inférieur à un diamètre extérieur de l'extrémité (12) de la tige de fourche de bicyclette.

15. Ensemble selon la revendication 14, dans lequel une force de serrage qui dans un état non chargé est exercée par les sangles (21, 22) respectivement sur le guidon de bicyclette (15) et sur l'extrémité (12) de la tige de fourche de bicyclette, est déterminée par la rigidité en flexion des sangles (21, 22), qui est elle-même déterminée par une épaisseur de paroi des sangles (21, 22), et par la différence entre les diamètres intérieurs des sangles (21, 22) dans un état relâché et les diamètres extérieurs respectivement du guidon de bicyclette (15) et de l'extrémité (12) de la tige de fourche de bicyclette.

16. Ensemble selon l'une quelconque des revendications 13 à 15, dans lequel au moins une partie d'au moins un élément parmi les sangles (21, 22), le guidon de bicyclette (15) et l'extrémité (12) de la tige de fourche de bicyclette est pourvue d'un relief de surface.

17. Ensemble selon l'une quelconque des revendications 13 à 16, dans lequel le dispositif de réglage de l'élément d'accouplement (1, 2, 3, 4) peut être actionné depuis une poignée du guidon de bicyclette (15), où de préférence un câble à arrêtoir ou une commande à poussoir et à gâchette est appliqué(e).

18. Ensemble selon l'une quelconque des revendications 13 à 16, dans lequel la position du guidon de bicyclette (15) par rapport à la tige de fourche de bicyclette est assurée au moyen d'une biellette (90) qui est connectée à rotation à la tige de fourche de bicyclette d'une part et au guidon de bicyclette (15), par l'intermédiaire d'un bras (91), d'autre part, dans lequel une distance centre à centre des axes de rotation de la biellette (90) est sensiblement aussi grande qu'une distance centre à centre des angles (21, 22).

19. Ensemble selon l'une quelconque des revendications 13 à 18, dans lequel la tige de fourche de bicyclette est pourvue de deux vis d'arrêt, dans lequel les positions desdites vis d'arrêt correspondent à deux positions extrêmes définies de l'élément d'accouplement (1, 2, 3, 4), et dans lequel de préférence les positions des vis d'arrêt sont réglables.

20. Bicyclette pourvue d'un élément d'accouplement (1, 2, 3, 4) selon l'une quelconque des revendications 1 à 12.

21. Bicyclette pourvue d'un ensemble selon l'une quelconque des revendications 13 à 19.
